Europäisches Patentamt

(19) European Patent Office

Office européen des brevets

(11) Publication number: **0 228 850**
**B1**

(12) **EUROPEAN PATENT SPECIFICATION**

(45) Date of publication of the patent specification:
16.05.90

(21) Application number: 86309733.3

(22) Date of filing: 12.12.86

(51) Int. Cl.⁵: **G12B 17/08**

(54) Anti-vibration mount assembly.

(30) Priority: **12.12.85 GB 8530611**

(43) Date of publication of application:
**15.07.87 Bulletin 87/29**

(45) Publication of the grant of the patent:
**16.05.90 Bulletin 90/20**

(84) Designated Contracting States:
**AT BE CH DE FR IT LI LU NL SE**

(56) References cited:
**LUEGER, Lexikon der Technik; Deutsche
Verlags-Anstalt Stuttgart; vol. 15, edition 4, 1971**

(73) Proprietor: **PLESSEY OVERSEAS LIMITED, Vicarage
Lane, Ilford Essex IG1 4AQ(GB)**

(72) Inventor: **Bicknell, Ronald William, 23 Bradden Road
Greens Norton, Towcester Northamptonshire,
NN12 8BS(GB)**
Inventor: **Shorrocks, Nicholas Martyn, 111 Spinney Hill
Road, Northamptonshire, N3 10Q(GB)**

(74) Representative: **Fish, Norman Ernest et al, The Plessey
Company plc Intellectual Property Department Vicarage
Lane, Ilford Essex IG1 4AQ(GB)**

## Description

### Technical Field

The present invention concerns improvements in or relating to anti-vibration mount assemblies including one or more electronic devices of the type as hereinafter defined as the device wherein the optimum performance thereof deteriorates with bending effects, essentially those introduced by oscillatory motion caused by vibration.

Pyroelectric infra-red detecting devices, especially, are susceptible to microphony voltages generated by stretching of detector elements in the plane of the device, as may be caused by bending of the substrate or package upon which they are mounted.

### Background Art

Hitherto bending effects have been reduced by means of mounting the device package upon a solid massive mount - see for example United Kingdom patent application No: GB 2 148 596A and related European patent application EP-A 0 141 582. It is however a problem that this type of assembly results in a heavy and bulky construction, which is generally inconvenient in use.

### Disclosure of the Invention

This invention is intended as an alternative and comparatively light-weight assembly to reduce or even eliminate package bending at the position of the detector and in consequence to reduce microphony effects to a minimum.

In accordance with the invention thus there is provided an anti-vibration mount assembly (1) comprising one or more electronic devices (3) of the type whose optimum performance deteriorates with bending effects, essentially those introduced by oscillatory motion caused by vibration and, a package body (9) supporting said one or more devices (3) and firmly mounted on a block member (15) having substantially the same cross-sectional area as the package body (9), the assembly (1) being characterised by a suspension system (17, 19) including one or more suspension members (17) mounted on a frame (19), and arranged to contact the block member (15) within the peripheral boundary thereof, the suspension member (17) being positioned symmetrically relative to the centre of the package body (9) so as to reduce or eliminate the bending moment at the centre of the package body, when the package body is vibrated in a vertical direction normal to the plane of the device.

It is desirable that the suspension system should match or emulate the planar symmetry of a detector or other device which it is required to mount. Thus it may consist of parallel bars or equivalent to mount a linear array of devices or an elongate device, or four suspension points or a rectangular support to mount a rectangular array of devices or a rectangular device. For many purposes, especially for devices of four-fold symmetry or higher, circularly symmetric mounting is adequate. This may also lead to easier manufacture.

Member spacing, - or in the case of a single hollow suspension member, the diameter or rectangle dimensions, may be chosen to optimise bending effect reduction.

It is advantageous, furthermore, to locate the one or more devices so that the plane in which they lie is co-incident with, (or at least nearly so) the neutral bending plane of the assembly. This may be achieved by using as package lid, one of a significantly increased mass.

### Brief Introduction of the Drawings

In the drawings accompanying this specification:-

Figure I is a cross-section view of an anti-vibration mount assembly, constructed in accordance with this invention;

Figure 2 is a graph showing experimental plots for measured microphony voltage as a function of the diameter of a ring support, the form of support member shown in Figure I;

Figure 3 and 4 show in cross-section and in plan-view, respectively, an assembly modified to afford device mounting in the neutral bending plane thereof;

Figure 5 is a graph showing measured microphony voltage as a function of detector distance from the package centre, for different values of support ring radius; and,

Figure 6 is a graph showing measured microphony voltage, for a detector at package centre, as a function of support-ring radius for two sizes of package lid, and for a standard size package.

### Description of a Preferred Embodiment

So that this invention may be better understood, embodiments thereof will now be described with reference to the drawings. The description that follows is given by way of example only.

It is intended that this invention should be applicable to a wide variety of devices, packages, and applications, but for the purposes of illustration an application to a multi-element square pyroelectric detector array mounted centrally in a large package is described.

An assembly I including a multi-element rectangular pyroelectric array 3 is shown in Figure I. The detector array 3 is mounted on a silicon signal processing slice 5 which is in turn mounted on a ceramic substrate 7 the surface of which is covered with metallised radiating tracks to bring the electric signals generated by the detector 3 to the periphery of a package 9 where they can be connected via flexible connections II to following signal processing circuits. The package 9 incorporates an infra-red transmitting window I3. To increase rigidity it is normal practice to mount the package 9 firmly on a thicker support I5 having the same cross-sectional area as the package 9.

The suspension system consists of a rectangular or annular ring I7 which supports the package 9, of such dimensions, and positioned centrally relative to the package 9, so that the bending moments at the centre of the package 9 are zero when the package is vibrated in a vertical direction normal to the plane of the detector.

The supporting ring 17 has itself to be mounted on a frame 19 such that it is not distorted with vibratory movements. It must be sufficiently compliant to isolate the complete assembly from external shock, but rigid enough so as not to produce a resonant frequency within the operating frequency bandwidth of the detector.

Since the suspension system is applicable to a very wide range of package designs and applications it is not possible here to give definitive dimensions for either the ring 17 or the frame 19. Simple calculations are not in themselves accurate enough to define the parameters, and must be supplemented by experiment designed to optimise calculated critical dimensions which can only be approximate.

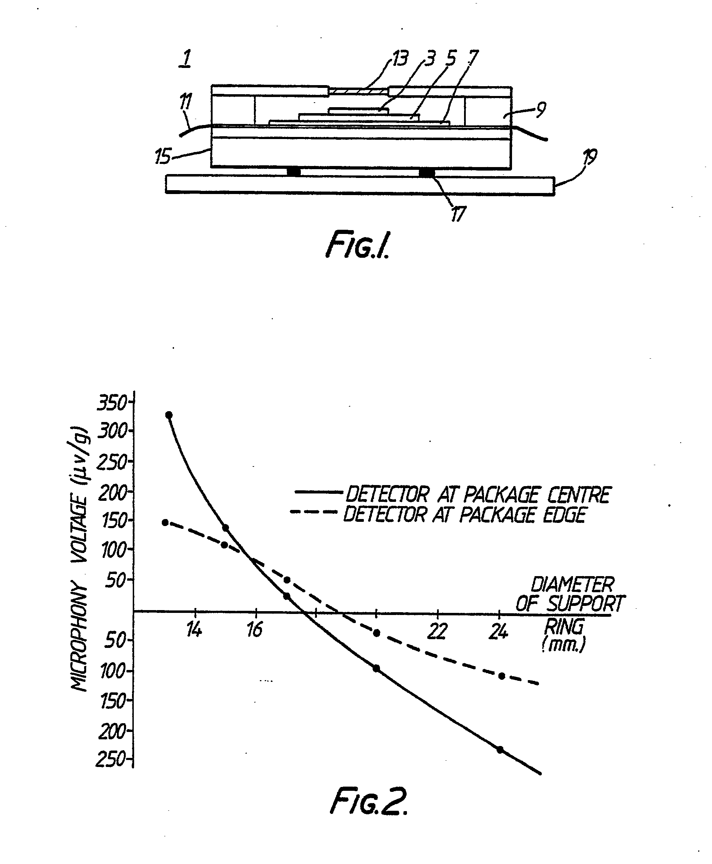

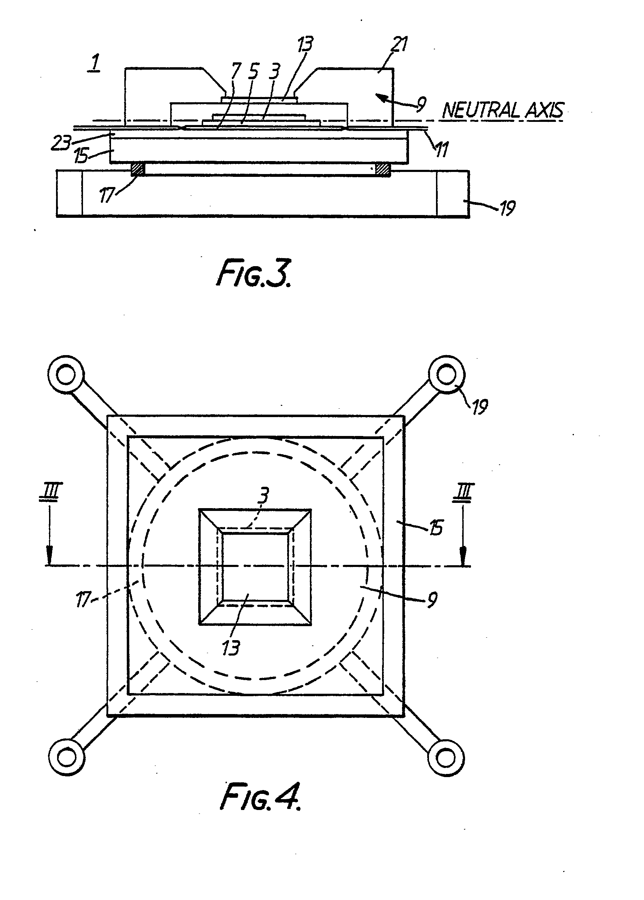

Simple calculations using a circular thin disc approximation show that if the package 9 illustrated in Figure 1 is suspended on a circular ring of radius 0.62 R where 'R' is an effective radius of the package or supporting block (ie. $\pi R^2 \sim A$, where 'A' is the area of the package), zero bending occurs at the centre. The effective area 'A' is however dependent upon many factors such as non-uniformity of construction, the effect of connecting cables, the position of the detector relative to the neutral bending axis of the complete assembly, and must at present be finally determined by experimental measurements using ring diameters based on an effective area 'A' equal to that of the horizontal linear dimensions of the package and assembly.

For most purposes it is important that the residual microphony voltages generated by bending of the detector, which varies across its surface as $\sim B + Kr^2$ (where 'K' and 'B' are constants and r is the distance from the centre), are in phase with the centre as this makes subsequent noise compensation easier to accomplish. Thus it may be necessary to not quite eliminate the bending effect at the centre in order to ensure that with manufacturing tolerances all residual bending effects are in phase with each other.

Experimental results with pyroelectric detectors mounted in 24mm. sq. flat ceramic packages 9 supported on equal area blocks 15 of different thicknesses and different diameter ring supports 17 and subjected to 2g sinusoidal vibration over the frequency range 50 HZ to 1000 HZ have shown that it is possible to reduce mean peak microphony voltages to 20 μV/g at the centre of the package, and 50 μV/g in the corner of the package, with a support ring 17 of annular thickness 1mm. and mean diameter of 17mm (see Figure 2). The measured microphony voltages varied approximately linearly and could have been reduced to zero and 40 μV/g for the centre and corner of the package if the mean support ring diameter had been increased to 17.5mm. These minimum measured results are about an order of magnitude lower than those usually expected for these types of device in this sort of package.

If the neutral bending axis of the package is close to the plane of the detector, then not only are the microphony voltages caused by stretching the detector in the plane of the detector low, (resulting from vibration in the direction normal to the plane of the detector), but the increase of microphony as the radius of the supporting annulus is varied from ideal is also low.

In order to verify this, a thick ceramic lid 21 (Figure 3) was designed for a 50mm sq. ceramic package 9 and was used to obtain preliminary measurements of the microphony voltages developed in a pyroelectric detector array 3 when the package 9 was vibrated in a direction perpendicular to the plane of the detector array 3. The lid 21, manufactured from ceramic of the same type as the 6mm thick base 23, was made 10mm high with an fl, 10mm square aperture for the window 13, and recessed to accommodate the detector 3. Approximate calculations, using bending moments of the lid 21, the base 23 and supporting system 15, 17 and 19 showed that the neutral plane would lie about 1mm below the plane of the detector array, i.e. at about 10mm below the top surface of the lid 21. The whole package 9 was supported on an annular ring 17 of 39mm internal diameter, and 43mm external diameter, chosen so that the microphony signals from the centre and the edge of the pyroelectric array 3 were of the same phase. This annular ring 17 was fixed to a cruciform support 19 by which it was bolted to a test vibrator. The assembly was oscillated in a direction normal to the plane of the detectors 3 at 2g over the frequency range 0 to 1KHz.

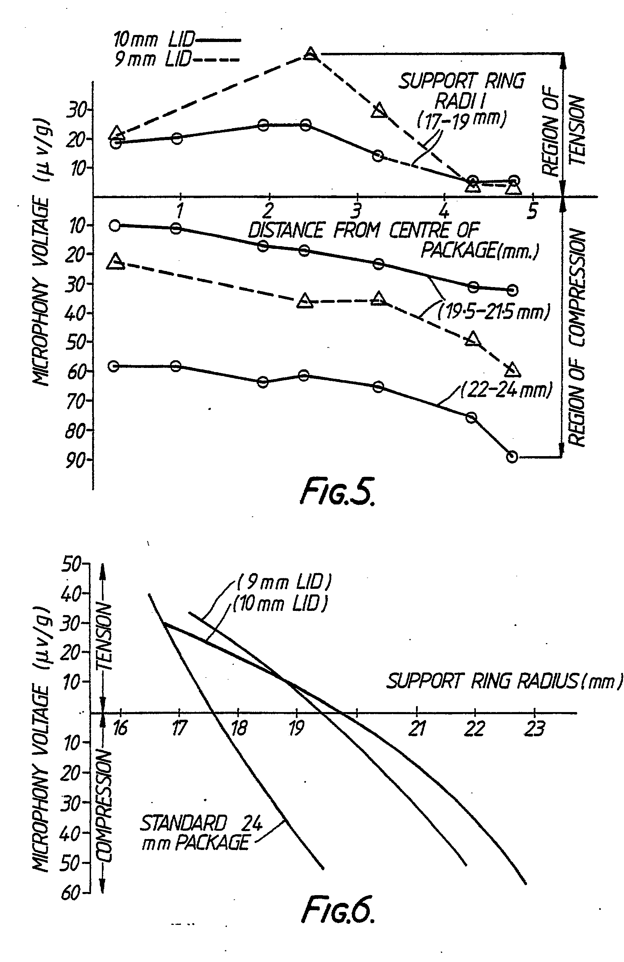

Measured microphony voltages (Figure 5) show that with the supporting annulus 17 of mean diameter 41mm the resulting microphony varied from 10 μV/g at the centre of the package to 35 μV/g at 5, from the centre. With a supporting ring 17 of mean diameter 46mm the corresponding microphonic voltages were 55 μV/g and 90 μV/g at the centre and at 5mm from the centre, and with a supporting annulus 17 of mean diameter 36mm the corresponding microphony voltages were 18 μV/g at the centre and 5 μV/g at 5mm from the centre. A change of phase of the microphony voltages relative to the acceleration sense occured between the results obtained for supporting rings 17 of mean diameters 41mm and 36mm indicating that the strain had gone from compressive in the first to tensile in the second. At an intermediate position between these two support ring diameters the microphony voltage at the centre would be reduced to zero, and to about 20 μV/g at 5mm from the centre.

To verify the position of the neutral bending axis, measurements were repeated with 1mm of material ground off the top surface of the package lid 21, reducing the overall height of the lid 21 above the detectors 3 to 8.5mm and lowering the neutral bending axis to an estimated 1.5mm below the plane of the detectors 3. The microphony voltages (Figure 6) at the centre and further out showed a corresponding increase for both support annulus rings 36, and 41mm diameter Figure 2, indicating that by reducing the thickness of the lid 21, the neutral axis had moved further away from the plane of the detectors 3 compared with the package 9 as originally designed.

These results show that designing this particular package (Figure 3) to have the neutral bending axis within lmm of the plane of the pyroelectric detectors 3, produces improvements in the positioning tolerance of the supporting annulus l7 to achieve low microphony voltages. Thus to achieve less than l0 μV/g at the centre of the package 9 a supporting ring tolerance of +/-0.75mm is indicated (Figure 5) as against a tolerance of 0.25mm indicated by the results shown in Figure 2. Since for small bending distortions of the package 9 the effects are linear, it would be possible to double the tolerance in ring diameter if the distance between the neutral bending axis of the package 9 and the detectors 3 were halved.

It may be necessary, for optimum results, to correct the calculated dimensions by experimental determinations. For example it has been found that the optimum support ring diameter is usually greater than 0.7R (where R is the effective radius for the package), rather than 0.62R as shown by simple calculation. It is also necessary to take into account any stiffening effect on the package 9 of the supporting annulus l7.

Though the positioning of the detector 3 at the neutral bending plane of the package 9 can be used effectively by itself to produce a low microphony package, when used with the annular ring support system l7 and l9, it produces a robust low microphony system with a large manufacturing tolerance.

## Claims

1. An anti-vibration mount assembly (1) comprising one or more electronic devices (3) of the type whose optimum performance deteriorates with bending effects, essentially those introduced by oscillatory motion caused by vibration and a package body (9) supporting said one or more devices (3) and firmly mounted on a block member (15) having substantially the same cross-sectional area as the package body (9), the assembly (1) being characterised by a suspension system (17, 19) including one or more suspension members (17) mounted on a frame (19), and arranged to contact the block member (15) within the peripheral boundary thereof, the suspension member (17) being positioned symmetrically relative to the centre of the package body (9) so as to reduce or eliminate the bending moment at the centre of the package body, when the package body is vibrated in a vertical direction normal to the plane of the device.

2. An assembly (1) as claimed in claim 1, the assembly (1) including a single elongate device (3), and, a spaced pair of parallel bar suspension members (17) located symmetrically each side of the package (9) centre.

3. An assembly (1) as claimed in claim 1, this assembly (1) including a plurality of devices (3) arranged in a linear array, and a spaced pair of parallel bar suspension members (17) located symmetrically each side of the package (9) centre.

4. An assembly (1), as claimed in claim 1, this assembly (1) comprising a single rectangular device (3) and a suspension system (17, 19) comprising four point members (17).

5. An assembly (1), as claimed in claim 1, this assembly (1) comprising a rectangular array of devices (3) and a suspension system (17, 19) comprising four point members (17).

6. An assembly (1), as claimed in claim 1, this assembly (1) comprising a single rectangular device (3) and a suspension system (17, 19) comprising a hollow rectangular suspension member (17).

7. An assembly (1), as claimed in claim 1, this assembly (1) comprising a rectangular array of devices (3) and a suspension system (17, 19) comprising a hollow rectangular suspension member (17).

8. An assembly (1), as claimed in claim 1, this assembly (1) comprising a single square device (3) and a suspension system (17, 19) comprising a ring suspension member (17).

9. An assembly (1), as claimed in claim 1, this assembly (1) comprising a four-fold symmetric array of devices (3) and a suspension system (17, 19) comprising a ring suspension member (17).

10. An assembly (1), as claimed in any one of the preceding claims wherein the one or more devices (3) are located in, or substantially near to, the neutral bending plane of the assembly (1).

11. An assembly (1) as claimed in claim 10, wherein a lid (21) of the package is of a massive structure such that the neutral bending plane of the assembly (1) lies above the package (9) base.

## Patentansprüche

1. Eine erschütterungsfreie Befestigungsanordnung (1), umfassend ein oder mehrere elektronische(-s) Gerät(-e) (3) von der Art, bei welcher optimale Betriebsbedingung resp. Leistungsfähigkeit durch Biegeeffekte vermindert wird, welche sich weitgehendst durch oszillierende Bewegungen, erzeugt durch Schwingungen resp. Vibration, ergeben; und einen Packungskörper (9), in oder auf welchem das besagte eine oder die mehreren Geräte (3) gelagert ist (sind) und der fest auf einem Blockteil (15) befestigt ist, das im wesentlichen die gleiche Querschnittsfläche aufweist wie der Packungskörper (9), wobei die Anordnung gekennzeichnet ist durch ein Halterungs- resp. Aufhängungssystem (17, 19), mit einschliessend ein oder mehrere Halterungsteil(-e) (17), welche auf einem Rahmen (19) befestigt sind, und angeordnet, um das Blockteil (15) innerhalb der peripheren Abgrenzungen davon zu berühren, wobei das Halterungsteil (17) symmetrisch relativ zum Zentrum des Packungskörpers (9) derart angeordnet ist, um das Biegemoment am Zentrum des Packungskörpers (9) zu reduzieren oder zu eliminieren, wenn der Packungskörper in vertikaler Richtung normal zur Ebene des Gerätes erschüttert resp. vibriert wird.

2. Anordnung (1) nach Anspruch 1, wobei die Anordnung (1) ein einziges ausgedehntes Gerät umfasst und ein beabstandetes Paar von parallelen Stabhalterungsteilen (17), die symmetrisch an jeder Seite des Packungs- (9) Zentrums angeordnet sind.

3. Anordnung (1) nach Anspruch 1, wobei diese Anordnung (1) eine Vielzahl von Geräten (3) umfasst, die in einer linearen Reihe angeordnet sind, und ein beabstandetes Paar von parallelen Stabhalterungsteilen (17), die symmetrisch an jeder Seite des Packungs- (9) Zentrums angeordnet sind.

4. Anordnung (1) nach Anspruch 1, wobei diese Anordnung (1) ein einziges rechteckiges Gerät (3) umfasst, und ein Halterungs- resp. Aufhängesystem (17, 19) umfassend vier punktförmige Bauteile (17).

5. Anordnung (1) nach Anspruch 1, wobei diese Anordnung (1) eine rechteckige Reihe von Geräten (3) umfasst, und ein Halterungs- resp. Aufhängesystem (17, 19) umfassend vier punktförmige Teile (17).

6. Anordnung (1) nach Anspruch 1, wobei diese Anordnung (1) ein einziges rechteckiges Gerät (3) umfasst, und ein Halterungs- resp. Aufhängesystem (17, 19) umfassend ein hohlförmiges rechteckiges Halterungsteil (17).

7. Anordnung (1) nach Anspruch 1, wobei diese Anordnung (1) eine rechteckige Reihe von Geräten (3) umfasst und ein Halterungssystem (17, 19) umfassend ein hohlförmiges rechteckiges Halterungsteil (17).

8. Anordnung (1) nach Anspruch 1, wobei diese Anordnung (1) ein einziges quadratisches Gerät (3) umfasst und ein Halterungssystem (17, 19) umfassend ein ringförmiges Halterungsteil (17).

9. Anordnung (1) nach Anspruch 1, wobei diese Anordnung (1) eine vierfach symmetrische Reihe von Geräten (3) und ein Halterungssystem (17, 19) umfasst mit einem ringförmigen Halterungsteil (17).

10. Anordnung (1) nach irgendeinem der vorangehenden Ansprüche, worin eines oder mehrere Geräte (3) innerhalb oder im wesentlichen nahe der neutralen Biegeebene der Anordnung (1) angeordnet ist (sind).

11. Anordnung (1) nach Anspruch 10, worin eine Abdeckung (21) der Packung eine derart massive Bauweise aufweist, dass die neutrale Biegeebene der Anordnung (1) oberhalb der Packungs- (9) Basis liegt.

## Revendications

1. Ensemble (1) de montage antivibratoire comprenant un ou plusieurs dispositifs électroniques (3) du type dont les performances optimales sont détériorées par des effets de flexion, essentiellement ceux qui sont introduits par un mouvement oscillatoire provoqué par des vibrations, et un corps de boîtier (9) supportant un ou plusieurs dispositifs (3) et fermement monté sur un bloc (15) ayant pratiquement la même section que le corps de boîtier (9), l'ensemble (1) étant caractérisé par un système de suspension (17, 19) comprenant un ou plusieurs organes de suspension (17) montés sur un cadre (19) et destinés à être au contact du bloc (15) dans les limites de sa périphérie, l'organe de suspension (17) étant disposé symétriquement par rapport au centre du corps du boîtier (9) afin qu'il réduise ou élimine le moment de flexion au centre du corps du boîtier, lorsque en direction verticale perpendiculaire au plan du dispositif.

2. Ensemble (1) selon la revendication 1, l'ensemble (1) comprenant un seul dispositif allongé (3) et deux organes parallèles et distants (17) de suspension sous forme de barres placés symétriquement de part et d'autre du centre du boîtier (9).

3. Ensemble (1) selon la revendication 1, l'ensemble (1) comprenant plusieurs dispositif (3) formant une rangée, et deux organes parallèles et distants (17) de suspension en forme de barres placés symétriquement de part et d'autre du centre du boîtier (9).

4. Ensemble (1) selon la revendication 1, l'ensemble (1) comprenant un dispositif rectangulaire unique (3) et un système de suspension (17, 19) comprenant quatre organes ponctuels (17).

5. Ensemble (1) selon la revendication 1, l'ensemble (1) comprenant une matrice rectangulaire de dispositifs (3) et un système de suspension (17, 19) comprenant quatre organes ponctuels (17).

6. Ensemble (1) selon la revendication 1, l'ensemble (1) comprenant un seul dispositif rectangulaire (3) et un système de suspension (17, 19) comprenant un organe rectangulaire creux (17) de suspension.

7. Ensemble (1) selon la revendication 1, l'ensemble (1) comprenant une matrice rectangulaire de dispositifs (3) et un système de suspension (17, 19) comprenant un organe rectangulaire creux (17) de suspension.

8. Ensemble (1) selon la revendication 1, l'ensemble (1) comprenant un seul dispositif carré (3) et un système de suspension (17, 19) comprenant un organe annulaire (17) de suspension.

9. Ensemble (1) selon la revendication 1, l'ensemble (1) comprenant une matrice de dispositifs (3) à symétrie quadruple et un système de suspension (17, 19) comprenant un organe annulaire (17) de suspension.

10. Ensemble (1) selon l'une quelconque des revendications précédentes, dans lequel le dispositif ou les dispositifs (3) sont placés dans le plan neutre de flexion de l'ensemble (1) ou près de ce plan.

11. Ensemble (1) selon la revendication 10, dans lequel un couvercle (21) du boîtier a une structure massive afin que le plan neutre de flexion de l'ensemble (1) se trouve au-dessus de la base du boîtier (9).

*FIG.I.*

*FIG.2.*

*Fig.3.*

*Fig.4.*

*Fig.5.*

*Fig.6.*